# FASCICULE DE BREVET EUROPEEN

(11) **EP 1 176 841 B1**
(45) Date de publication et mention de la délivrance du brevet: **27.08.2003**
(21) Numéro de dépôt: 01401893.1
(22) Date de dépôt: 13.07.2001
(51) Int. Cl.: H04Q 7/22, H04Q 7/38, H04Q 7/32

(54) **Procédé de communication entre une station de base et un téléphone mobile et téléphone mobile utilisable pour mettre en oeuvre le procédé**
Verfahren für Kommunikation zwischen einer Basisstation und einer Mobilfunkstation, und eine Mobilfunkstation für die Verwendung dieses Verfahrens
Communication procedure between a base station and a mobile phone, and mobile phone for use in accordance with the procedure

(30) Priorité: 28.07.2000 FR 0010017
(43) Date de publication de la demande: 30.01.2002
(73) Titulaire: SAGEM S.A., 75015 Paris (FR)
(72) Inventeur: Alos, Rafael, 95520 Osny (FR)
(74) Mandataire: Schmit, Christian Norbert Marie

(56) Documents cités:
- WO-A-01/52566
- WO-A-99/53704
- US-A- 5 978 368

## Description

La présente invention a pour objet un procédé de communication entre une station base et un téléphone mobile ainsi qu'un téléphone mobile utilisable pour mettre en oeuvre le procédé. Le but de l'invention est de permettre une utilisation plus grande d'un téléphone mobile même si ce téléphone mobile est d'une classe dégradée, à priori incapable de mettre en oeuvre certaines fonctions. D'une manière plus générale, l'invention vise à réduire le coût des téléphones mobiles en permettant à des téléphones mobiles élémentaires, à bas coûts, de fonctionner aussi bien que des téléphones mobiles munis de perfectionnements.

Plus précisément l'invention vise à permettre l'utilisation simultanée d'un téléphone mobile en mode de circuit et en mode paquet. Typiquement l'utilisation de téléphones mobiles en mode de circuit correspond à l'établissement d'un circuit entre deux interlocuteurs, éventuellement entre deux dispositifs de transmissions de données. A ce titre, le téléphone mobile de l'invention ne sera pas uniquement utilisé dans une utilisation de phonie, mais pourra permettre, notamment par l'intermédiaire d'un connecteur d'embase, de servir de modem pour une telle transmission de données. Dans ce but, on continuera à utiliser ici cette terminologie bien qu'elle ne s'appliquera pas nécessairement à une liaison de phonie. Un fonctionnement en mode circuit à pour conséquence que, pendant toute une durée d'une communication, un canal de communication est réservé pour la communication. En conséquence l'utilisateur paye la location de ce canal au prorata de cette durée de communication, indépendamment de l'émission et de la réception de données.

Un autre mode de transmission connu est le mode de transmission par paquets. Dans un tel cas, des paquets sont émis et chaque paquet comporte une désignation de son destinataire. Les téléphones mobiles qui ne sont pas destinataires de l'information, ne conservent pas dans leur mémoire le contenu des paquets qui ne leurs sont pas destinés. Par ailleurs, pour éviter à ces téléphones mobiles d'effectuer les décodages de tous les paquets reçus, même ceux qui ne leur sont pas destinés, des signaux de signalisations émis par l'émetteur, donnent des rendez-vous temporels aux récepteurs pour que ceux-ci puissent se satisfaire du décodage des seuls signaux qui leur sont destinés. Dans l'autre sens, pour les transmissions de signaux du téléphone mobile vers une station de base, un système de jetons, ou de tours de rôle permet d'éviter que divers téléphones mobiles, à l'écoute d'un même canal, ne provoquent des collisions d'émission de signaux de données à émettre. La conséquence la plus importante du mode de transmission paquet est bien entendue que l'utilisateur ne paye le canal qu'au prorata de la quantité de paquets qui lui sont destinés ou qu'il envoie.

En pratique un tel téléphone mobile fonctionnant en mode de paquet est en permanence à l'écoute du canal de transmission par paquet. Il devient un acteur utilisant ce canal à la suite d'une procédure d'établissement d'une liaison pour des transmissions de signaux sur ce deuxième canal. Cette liaison établie est une connexion de type TBF, Temporary Block Flow - flux de bloc temporaire. Cette liaison est de durée finie, connue à l'avance. La valeur de cette durée est prévue dans des signaux de signalisation préalables notamment en fonction de la quantité de données à transmettre. Si la quantité de données à transmettre est trop importante, une durée TBF de base est instituée, et cette durée est reconduite à son issue tant que la totalité des informations à transmettre n'est pas transmise. En définitive, l'utilisateur paye pour un nombre de durées TBF qu'il a réellement utilisées.

Un téléphone mobile pour mettre en oeuvre ces modes de communications, circuit ou par paquet, peut être de trois classes. La classe C, correspondant aux téléphones mobiles les moins performants, possède une commande, imposée par l'utilisateur notamment à l'aide d'un clavier, pour faire fonctionner exclusivement le téléphone mobile en mode de circuit ou en mode de paquet. Selon sa présélection, au moment de sa mise en service et de sa reconnaissance par le réseau de téléphonie mobile, le téléphone mobile envoie un signal de type Cc, pour signaler sont utilisation possible en mode de circuit, ou un signal de type Cg (g - GPRS, Global Packet Radio System - système global de transmission de paquets radio) pour signaler son conditionnement en tant que récepteur de paquets. Dans la suite de l'exposé on parlera préférentiellement du mode paquet selon la norme GPRS. Toutefois il serait envisageable d'aborder dans le cadre de l'invention un mode de transmission paquet qui ne serait pas conforme à la norme GPRS, mais conforme à une autre norme.

Par opposition à ces appareils de classe C fonctionnant exclusivement dans un mode ou dans l'autre selon une action de l'utilisateur, on distingue les appareils de classe B, dans lesquels la commutation d'un mode de circuit à un mode de paquet est automatique. Le coût des appareils de classe B est peu différent du coût des appareils de classe C. Il est possible avec un appareil de classe B de mettre en oeuvre une fonction de type suspend - resume, suspension - reprise, au court de laquelle on peut geler une session de communication dans un mode, en entamer une autre dans un autre mode, puis revenir à la première sans avoir perdu les informations distribuées. On peut aussi, notamment dans le mode GPRS, consulter un site Internet et basculer en mode de parole en cours de communication avec la station base. Il n'est pas nécessaire, comme avec un appareil de classe C, de rompre la connexion avec la station base et de la réinitialiser en déclarant un autre mode d'utilisation.

Pour simplifier les explications, on admettra ici que le protocole d'échange dans le mode de circuit ainsi que dans le mode paquet, en téléphonie mobile sont de même type, notamment de type GSM. Pour chacun d'eux on définit, dans l'environnement d'une station de base donnée, des lois des fréquences, des niveaux d'émissions, des durées d'anticipation d'émission, et des allocations de fenêtres temporelles d'émission et de réception. De même des voies balises peuvent être différenciées. En pratique, le mode de gestion de la mobilité induit des circuits de fonctionnements différents dans le mode circuit, qui est plus particulièrement destiné à assurer cette mobilité, de ceux du mode GPRS, par paquet, pour lequel la mobilité est un accessoire en plus. Un téléphone mobile de classe B, en pratique, est muni d'un double système de veille pour détecter des appels classiques et des demandes de service GPRS. Ce double système de veille est susceptible de fonctionner à la demande (sans réinitialisation), dans un mode ou dans un autre.

Pour l'utilisateur, ces fonctionnements sont différents. Ils nécessitent pratique des équipements fixes de natures totalement différentes.

Pour avoir un fonctionnement simultané dans un mode et dans l'autre, il est prévu des téléphones mobiles de classe A. En pratique ces téléphones mobiles de classe A doivent être munis d'un double émetteur récepteur pour pouvoir émettre et recevoir à la fois dans un mode et dans un autre, simultanément. Bien entendu le coût de ces appareils de classe A est notablement plus élevé que celui des appareils de classe B et bien entendu que celui des appareils de classe C.

Des indications précieuses sur l'utilisation du mode de transmission GPRS sont par ailleurs données dans le livre "Réseaux GSM - DCS" de Xavier Lagrange, Philippe Godlevski et Sami Tabbane, édition Hermès, France, troisième édition, septembre 1997, Page 326 et suivantes.

Le but de l'invention est de simplifier la construction des téléphones mobiles et, notamment dans le cadre défini ci-dessus, de permettre à des téléphones mobiles de classe B, voire de classe C, de fonctionner comme les téléphones mobiles de classe A. La différence entre les téléphones mobiles de classes B ou C et les téléphones mobiles de classe A est essentiellement que les téléphones mobiles de classes B et C ne possèdent qu'un seul dispositif émetteur récepteur.

Les documents "WO 99 53704 A" et "WO 01 52566 A" décrivent également des téléphones mobiles ne possédant qu'un seul dispositif émetteur/récepteur et permettant d'échanger simultanément des données prévues pour être échangées sur des canaux différents, en mode de circuit et en mode paquet. Le téléphone mobile du document "WO 99 53704 A" multiplexe les différentes données et les transmet sur un canal commun. Le téléphone mobile du document "WO 01 52566 A" transmet les données sur des canaux différents utilisant des fenêtres temporelles contiguës.

Pour permettre alors dans l'invention la simultanéité d'utilisation en mode de circuit et en mode paquet (GPRS), on prévoit de conditionner l'usage du mode de fonctionnement GPRS à la disponibilité de fenêtres temporelles, pour une loi de fréquence donnée. En effet, sans introduire immédiatement la notion d'agilité en fréquence, on peut définir un canal comme l'allocation d'une fenêtre temporelle dans une trame (en général des trames à huit fenêtres temporelles) et d'une fréquence de porteuse d'émission (ou de réception). En variante, dans un mode de transmission de type CDMA (Coded Division Multiple Acces - Accès multiple à répartition par codage) on peut définir un canal par une allocation d'une séquence de codage particulière. Pour éviter une superposition de signaux et permettre de multiples communications avec des téléphones, il est prévu que pendant des même fenêtres temporelles des téléphones mobiles différents utilisent des fréquences de porteuses différentes ou, pour des mêmes fréquences de porteuses, utilisent des fenêtres temporelles différentes.

Dans l'invention, au moment de l'établissement d'un canal de communication par paquet, on mesure une disponibilité, pour une loi de fréquence donnée (correspondant à la loi de fréquence en vigueur pour un téléphone mobile) et en émettant une requête en transmission de paquet. On utilise alors des fenêtres temporelles différentes de celles utilisées par le téléphone mobile pour transmettre ensuite des paquets d'information, en mode paquets

En pratique, dans l'invention plutôt que de laisser des équipements GPRS libres d'allouer des canaux de transmission selon un mode d'allocation propre, on fait interroger par ces équipements les équipements du mode de transmission en mode de circuit (en pratique des équipements BSC - Base Station Controler contrôleur de station de base). Cette interrogation a pour but que ces équipements communiquent les conditions dans lesquels trafique déjà un téléphone mobile qui est en communication.

Les équipements de transmission par paquets de l'invention déterminent alors quelles sont, pour une fréquence donnée, les fenêtres temporelles disponibles. Ils imposent alors à la communication par paquet avec le téléphone mobile ces fenêtres temporelles déterminées. Les transmissions exploitent aussi la loi de fréquence que le téléphone mobile pratique déjà dans son mode de communication de circuit.

En agissant ainsi, notamment en gardant une même loi de fréquence, on assure que pendant une trame, pendant les périodes d'émission ou de réception, le mobile n'a pas à se préoccuper de sauts de fréquence. Il est donc immédiatement disponible. Il est alors possible d'effectuer des transmissions en mode de circuit dans une fenêtre temporelle, et des transmissions en mode paquet dans des fenêtres temporelles immédiatement consécutives, sans fenêtre temporelle de garde. Les équipements du téléphone mobile nécessaires ne sont alors que son émetteur récepteur unique, lequel fonctionne pendant un nombre plus important de fenêtres temporelles, sans difficulté particulière.

En outre, en agissant ainsi, dans la mesure ou les signaux transmis proviennent d'une même BTS, Base Transceiver Station - équipement d'émission/réception de station de base, le codage de canal reste le même. De sorte que l'adaptation du filtre de canal du décodeur du téléphone mobile est immédiate. Tout au plus, le téléphone mobile doit communiquer, d'une fenêtre temporelle réservée à un mode de circuit à une fenêtre temporelle suivante réservée à un mode paquet, ou vice versa, un mode de traitement des informations reçues dans chacune de ces fenêtres temporelles. Celles reçues dans le mode circuit doivent subir un traitement correspondant à l'utilisation en mode circuit. Celles reçues en mode paquet doivent subir un traitement correspondant au mode paquet.

En pratique, le mode de circuit sera la plupart du temps un mode de phonie, encore qu'il pourrait être un mode de transmission de données. Par opposition, le mode de transmission paquet sera plutôt réservé à des utilisations du type visite de site Internet.

L'invention à donc pour objet un procédé communication entre une station de base et un téléphone mobile pour échanger simultanément des premiers signaux en mode de circuit et des deuxièmes signaux en mode paquet, dans lequel
- pour une trame de transmission on attribue un premier canal de transmission aux premiers signaux, et
- pour la même trame de transmission on attribue un deuxième canal de transmission aux deuxièmes signaux,
caractérisé en ce qu'il comporte les étapes suivantes
- on choisit le deuxième canal tel qu'une fréquence de porteuse d'échange dans chaque trame de transmission soit la même que pour le premier canal, et tel que des fenêtres temporelles d'échange pour les premiers et deuxièmes signaux soit différentes.

Elle a encore pour objet un téléphone mobile muni d'un seul circuit d'émission réception selon un mode de téléphonie mobile, caractérisé en ce qu'il comporte dans une mémoire programme un programme pour mettre en place une communication en mode de circuit et une communication en mode paquet utilisant une même loi de fréquence.

L'invention sera mieux comprise à la lecture de la description qui suit à l'examen des figures qui l'accompagnent. Celles-ci ne sont présentées qu'à titre indicatif et nullement limitatif de l'invention. Les figures montrent :
- Figure 1 : une représentation schématique d'un système de communication entre une station base et des téléphones mobiles utilisables pour mettre en oeuvre le procédé de l'invention ;
- Figures 2a et 2b : des diagrammes spectraux de fréquences porteuses utilisées dans un mode circuit, et dans un mode de paquet respectivement ;
- Figures 3a à 3c: une représentation schématique d'une allocation coordonnée des fenêtres temporelles pour qu'un téléphone mobile de classe B, ou C, puisse être considéré comme un téléphone mobile de classe A : c'est-à-dire fonctionner simultanément en mode de circuit et en mode paquet ;
- Figure 4: une représentation de tables mémorisées dans des mémoires d'un circuit de contrôle d'une station base utilisables pour mettre en oeuvre le procédé de l'invention ;
- Figure 5: une suite d'étapes mises en oeuvre avec le procédé selon l'invention, en comparaison d'étapes à mettre en oeuvre selon l'état de la technique ;
- Figure 6 : une représentation d'une partie des signaux de signalisation utilisables dans le mode de transmission paquet.

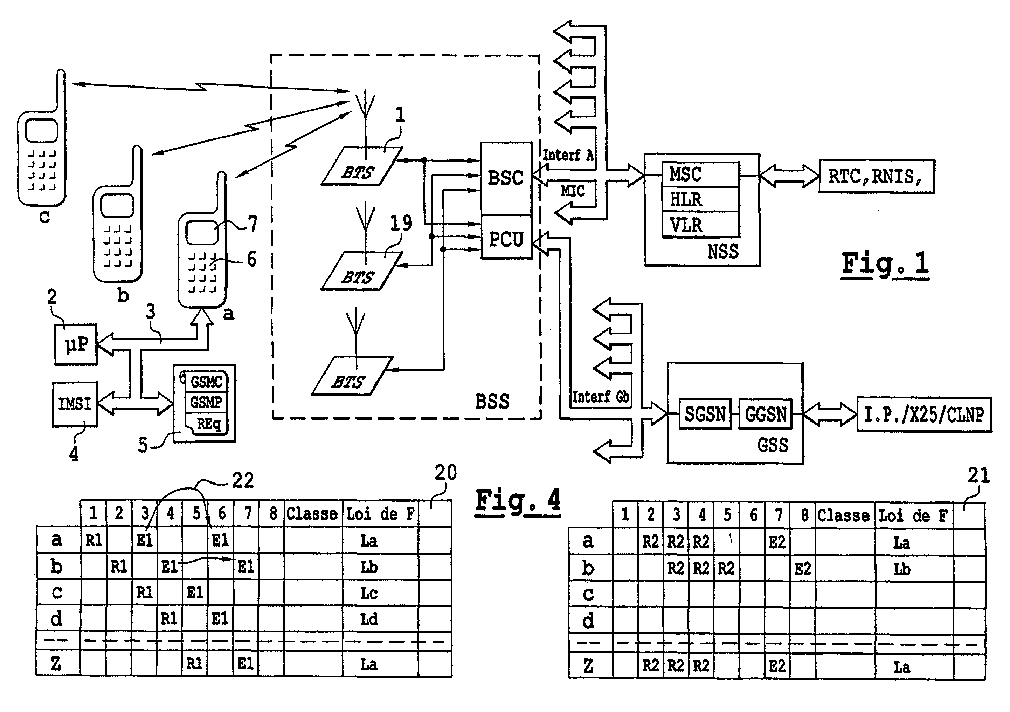

La figure 1 montre un système utilisable pour mettre en oeuvre le procédé de communication selon l'invention. Ce système comporte des téléphones mobiles a, b, c susceptibles d'entrer en relation avec une station de base 1 pour échanger des premiers signaux en mode de circuit et des deuxièmes signaux en mode paquet. Pour simplifier l'explication, par la suite on admettra, mais l'hypothèse inverse est bien sûr tout à fait envisageable, que les premiers signaux en mode de circuit sont des signaux de voix (mais ils pourraient être des signaux de données, voire des signaux SMS). On admettra également que les deuxièmes signaux en mode de paquet résultent de la consultation d'un site Internet. En effet, dans le cadre de la consultation d'un tel site Internet, la transmission sporadique de signaux conduit à ce qu'une grande quantité d'information peut être transmise pendant une courte durée suivie par une durée assez longue, pendant laquelle l'utilisateur examine sur un écran de son téléphone mobile des images résultant de la consultation. Pendant cette durée assez longue, aucun n'échange n'est entrepris.

Pour transmettre les signaux en mode circuit, des stations de base telles que 1 sont reliées à des circuits BSC, Base Station Controler - contrôleur de station de base, qui assurent en pratique la gestion des ressources ainsi que la signalisation à appliquer pour que les téléphones mobiles a b et c sachent respectivement extraire les signaux qui les concernent des signaux qui concernent les autres téléphones mobiles. Les circuits BSC acheminent en même temps, en provenance d'une interface dite A, des signaux en provenance d'un réseau téléphonique, RTC, RNIS ou autre. Ces signaux leurs sont transmis par un circuit dit NSS, Network Sub System - sous réseau fixe d'un réseau GSM, comportant principalement des bases de données de types connus dits HLR, VLR et un commutateur de téléphonie mobile MSC. Les bases de données HLR et VLR permettent à un opérateur de gérer les abonnements des différents utilisateurs en fonction de leurs durées de communication. Sur un territoire , par exemple grand comme la France, il peut y avoir plusieurs milliers de stations de base telles que 1. Il peut y avoir environ un millier d'équipements BSS, et une trentaine d'équipements NSS, de sorte que chacun de ces équipements NSS est relié à une trentaine d'équipements BSS.

A côté des équipements nécessaires à la transmission en mode de circuit, coexistent des équipements nécessaires à la transmission en mode paquet. Dans un équipement BSS, les circuits BSC sont ainsi équivalents à des circuits PCU (Packet Control Unit - unité de contrôle de paquets). Les circuits PCU jouent globalement un même rôle que les circuits BSC. Ces circuits PCU sont reliés à des circuits GSS (Gateway Sub System - passerelle de sous système) servant de pendant aux équipements NSS. Ces équipements GSS comportent eux-mêmes des circuits SGSN, Service GPRS Support Node - noeud de service GPRS, et GGSN, Gateway GPRS Support Node - noeud passerelle GPRS. Un noeud passerelle GGSN est relié à un ou plusieurs réseaux de données. Le noeud GGSN est un routeur qui permet aux paquets venant de réseaux de données externes d'être acheminés vers l'équipement SGSN du destinataire. Ce routeur est également capable d'envoyer les paquets sortants vers le réseau de données adéquat. Le réseau de données adéquat peut être le réseau Internet, un réseau X 25, un réseau CLNP, et plus généralement tout réseau au format I.P., Internet Protocol.

Les termes GGSN et SGSN désignent des entités fonctionnelles. Ces entités peuvent être implantées dans un même matériel - de la même façon que les fonctions MSC pour la commutation de circuits sont assurées par un même commutateur - voire même dans un commutateur MSC. L'ensemble des équipements GGSN, SGSN, des routeurs IP éventuels et des liaisons entre les équipements est appelé réseau fédérateur GPRS.

Il est nécessaire de plus de disposer d'un enregistreur de localisation pour assurer la mobilité. Cet enregistreur de localisation, GPRS Register - GR - registre GPRS, contient des informations de routage et garde la correspondance adresse dans le réseau de donnée - IMSI (International Mobile Subscriber Identification - Identification d'abonné du réseau téléphonie mobile). Le registre GPRS a donc un rôle similaire au registre HLR de l'équipement NSS. Il peut même en faire partie.

Le téléphone mobile a comporte un microprocesseur 2 relié par un bus 3 à une mémoire de donnée 4 (contenant notamment les numéros IMSI) à une mémoire programme 5 et aux équipements physiques 6 du téléphone mobile. Le téléphone mobile a peut être utilisé simultanément dans les deux modes : en utilisant son écran 7 pour visualiser une cession Internet par exemple et en utilisant en même temps son haut-parleur et son microphone pour une transmission de parole (voire pour une transmission de données en le reliant à un micro ordinateur par une prise d'embase).

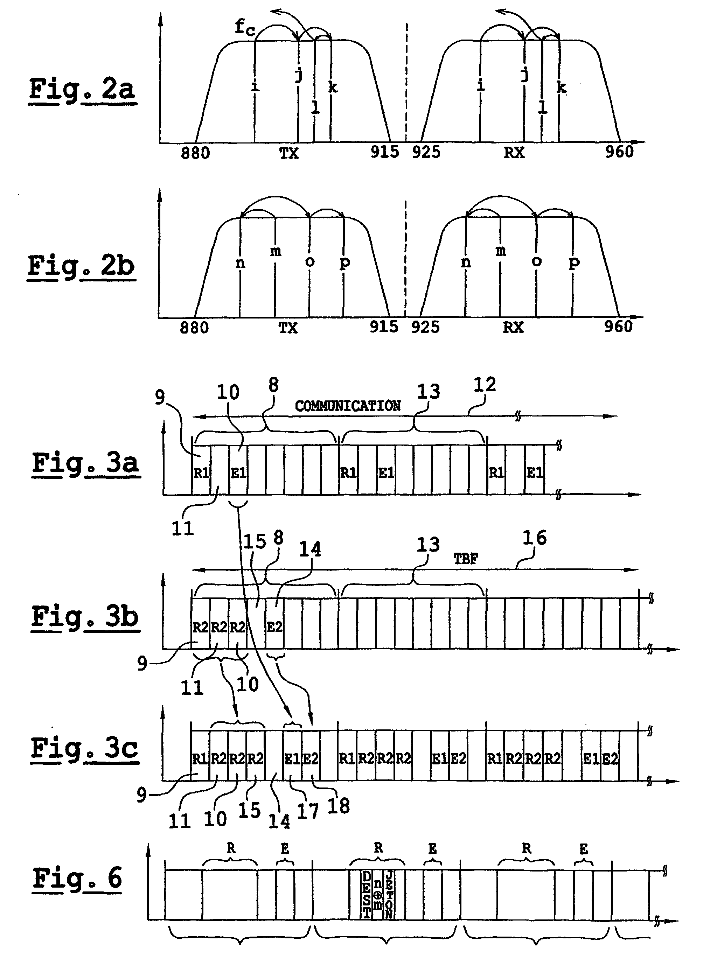

Les figures 2a et 2b, et 3a et 3b montrent un fonctionnement normal de téléphone mobile de classe A, c'est-à-dire qui comprendrait deux émetteurs récepteurs notamment. Sur les figures 2a et 3a sont représentées les caractéristiques du canal de communication en mode de circuit. Sur les figures 2b et 3b les même caractéristiques sont représentées correspondant à une communication en mode paquet. Ainsi sur la figure 2a pour le téléphone mobile a, une fréquence de porteuse utilisable en mode circuit fc, prend successivement les valeurs i, j, k et l. (selon une loi La de fréquence donnée). Chacune de ces quatre fréquences est sollicitée pseudo-aléatoirement. Un nombre de fréquences plus important peut avoir été imposé au moment de la mise en service du téléphone mobile a par la station de base 1 avec laquelle ce téléphone mobile a est entré en relation. La figure 2a montre les diagrammes d'émission, dans l'exemple en GSM, situées entre 880 MHz et 915 MHz et le diagramme de réception correspondant situé entre 925 MHz et 960 MHz dans le mode GSM. Dans une autre norme, DCS, PCS ou autres, d'autres valeurs seraient rencontrées.

Sur la figure 3a, on montre que, pour une trame 8, au cours d'une communication, une fenêtre temporelle 9 est allouée à la réception de premiers signaux alors qu'une fenêtre temporelle 10 est allouée à l'émission de premiers signaux par le téléphone mobile. D'une manière connue, la fenêtre 9 et la fenêtre 10 sont séparé par une fenêtre 11 au cours de laquelle le téléphone mobile ne réalise aucune opération d'émission ou de réception. La fenêtre 11 de neutralisation sert au téléphone mobile à commuter ses équipements internes pour passer, avec un même jeu d'oscillateurs d'une bande RX de réception à une bande TX d'émission. Tout au long d'une communication 12, une fenêtre 9 et une fenêtre 10 sont allouées au téléphone mobile a. D'une trame 8 à une trame 13 suivante, la fréquence de porteuse change de i à j puis à k et ainsi de suite selon la loi de fréquence La. Par contre d'une trame à l'autre les fenêtres allouées restent les mêmes.

Les figures 2b et 3b montrent que, pour une même trame de transmission 8, dans un mode de transmission par paquet, on peut avoir attribué des fenêtres temporelles consécutives 9, 11 et 10 à la réception de deuxième signaux et une fenêtre temporelle unique 14 pour l'émission, séparées de la fenêtre 10 par une fenêtre inutilisée 15. La fenêtre 14 joue le même rôle que la fenêtre 11. Pour la transmission des deuxièmes signaux, au cours de la trame 13 suivant la trame 8, une même répartition de fenêtres est conservée pour la réception et l'émission respectivement. Par contre, figure 2a, du fait de l'indépendance des circuits BSC, pour la transmission en mode de circuit et PCU pour la transmission en mode de paquet, la loi de fréquence attribuée est différente. Elle implique par exemple ici, pour la fréquence porteuse fp (fréquence de paquet) les valeurs différentes m, n, o et p. A priori, la séquence utilisée en mode de paquet est différente de la loi de fréquence La en mode de circuit.

Dans l'invention, pour résoudre des problèmes de compatibilité d'utilisation d'un téléphone mobile de classe B comme un téléphone mobile de classe A, on prévoit d'une part que la loi de fréquence utilisée dans le mode paquet GPRS sera la même, La, que la loi de fréquence utilisée en mode de communication de circuit. On aurait tout aussi bien pu déterminer l'inverse. Ce qui compte est que les lois soient les mêmes. Cependant, étant donné qu'une communication en mode de circuit a vocation à durer plus longtemps, au cours de la communication 12, qu'une communication en mode paquet dont la durée est limitée à une durée TBF 16 courte, il est préférable de respecter la loi de fréquence du mode de circuit qui est définie tout le temps de la communication 12.

Les figures 3a et 3b montrent qu'une fenêtre temporelle 9 était utilisée, en réception dans deux modes mais de différentes manières puisque la loi de fréquence était différente. En adoptant une même loi de fréquence, dans l'invention on prévoit de déplacer des fenêtres temporelles d'échange, en émission E et en réception R, pour qu'elles occupent des places différentes de celles correspondant à un autre mode. Comme représenté sur la figure 3c, on peut prévoir alors que la fenêtre 9 continue à servir pour la réception (par le mobile) en mode de circuit, alors que les fenêtres 11, 10 et 15 consécutives sont destinées à la réception en mode de transmission paquet et que la fenêtre 14 est neutralisée. Cette fenêtre 14 permet la commutation émission réception. En outre les deux fenêtres suivantes 17 et 18 dans la même trame servent respectivement à remplacer la fenêtre 10 de la figure 3a et la fenêtre 14 de la figure 3b.

Il serait envisageable d'agir différemment puisqu'en pratique il faut ici répartir sept fenêtres sur huit fenêtres disponibles, en tenant compte du temps de garde. Néanmoins cette manière de faire présente l'intérêt d'expliquer une étape supplémentaire de l'invention qui n'est pas toujours nécessaire, celle consistant à déplacer la fenêtre d'émission en mode de circuit de la fenêtre 10 et la fenêtre 17.

La figure 3c permet de constater qu'on transmet successivement dans le sens descendant (en réception), dans des fenêtres directement consécutives 9, 11, 10 et 15 d'une même trame, des premiers signaux et des deuxièmes signaux: R1 et R2 respectivement. De même dans le sens montant, dans des fenêtres 17 et 18 directement consécutives dans une même trame, on transmet des premiers signaux E1 et des deuxièmes signaux E2. On a vu qu'en pratique on avait séparé, une fin de réception des deuxièmes signaux R2 (à la fin de la fenêtre 15) du début à la fenêtre 17 d'émission de premiers signaux par une durée égale à une fenêtre temporelle le 14. On aurait également pu inverser les signaux E1 et E2 dans les fenêtres 17 et 18. pu

Dans le cas où on provoque le déplacement de la fenêtre 10 en fenêtre 17, on peut également choisir de privilégier des fenêtre temporelles préférentielles. En effet des stations de base proches, par exemple la station de base 19 proche de la station de base 1, peuvent émettre sur leur fenêtre zéro à leur fréquence balise (fixe) des signaux à puissance plus élevée jouant un rôle de brouilleur pour les signaux des autres stations bases. Du fait que la station base 19 n'est pas synchronisée avec la station de base 1, la fenêtre zéro de cette station de base peut provoquer des perturbations sur certaines fenêtres temporelles spécifiques dans les trames 8 et 13 de la station base 1. On évitera alors d'attribuer ces fenêtres perturbées aux fenêtres déplacées 17. Le déplacement de la fenêtre 10 en fenêtre 17 sera réalisé à l'aide d'un Hand Over Intracell c'est-à-dire une commutation de canal intérieure à la cellule dans laquelle la loi de fréquence est conservée. Dans une telle commutation seule la désignation de la fenêtre temporelle utilisée changera.

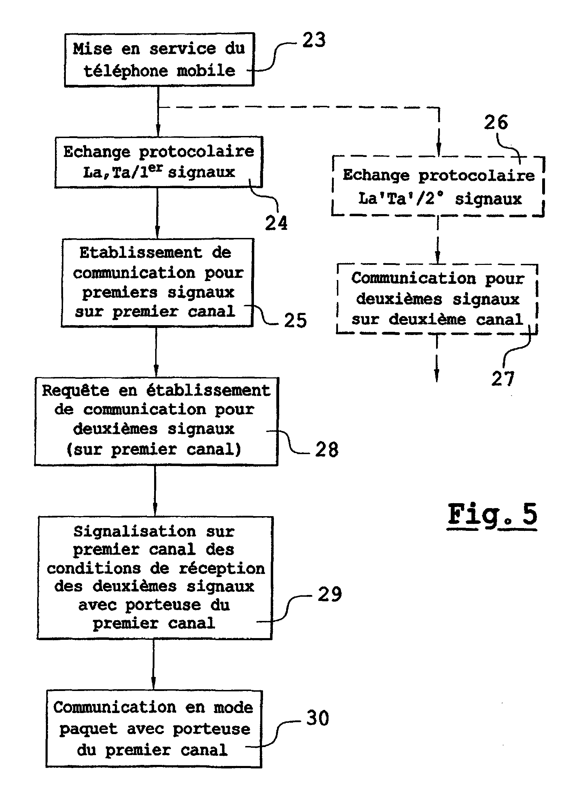

La figure 4 montre une première table 20 enregistrée dans les circuits BSC et permettant à ces circuits de mémoriser la localisation nécessaire pour gérer le parc des téléphones mobiles a, b et c en relation avec les stations de base 1 et 19 qui leurs sont connectées. Ainsi pour la station base 1, la table 20 comporte des enregistrements indiquant que le téléphone mobile a recevra des signaux en mode de circuit, R1, pendant la première fenêtre temporelle de chaque trame selon une loi de fréquence La. De même la table 20 indique que la troisième fenêtre temporelle de chaque trame est destinée à l'émission par ce téléphone mobile a.

De la même façon, dans les équipements PCU existera une table 21 avec des même types d'information. La particularité de l'invention se situe dans le fait que les attributions de fenêtres temporelles dans les circuits PCU, pour les transmissions en mode paquet, ne seront plus faites uniquement en fonction de critères propres à la transmission en mode paquet, mais également en fonction de contrainte d'utilisation des équipements BSC. Ainsi pour le téléphone mobile a, il sera d'abord demandé un changement de canal 22, au cours duquel la fenêtre d'émission passera de la troisièmes position dans la trame à la sixième position de la trame. Ceci libère alors les deuxième, troisième et quatrième positions dans la trame. Ces dernières positions deviennent utilisables pour y placer la réception de deuxièmes signaux en mode paquet. Dans ces conditions la septième position dans la trame sera affectée à l'émission par le téléphone mobile en mode paquet. Autrement dit, le circuit PCU interroge préalablement le circuit BSC (ou son équivalent). Le circuit PCU organise ensuite sa distribution en fonction des disponibilités dans la trame. Le cas échéant le circuit PCU demande au circuit BSC de programmer une commutation de canal. Le circuit PCU n'a pas besoin d'être synchronisé avec le circuit BSC. Leurs fenêtres temporelles zéro n'ont pas besoin de se produire en même temps. Si aucune synchronisation existe, il importe toutefois de repérer les fenêtres temporelles dans un mode pour leur donner un rang dans l'autre mode.

La figure 5 montre l'organigramme des étapes mises en oeuvre dans le procédé de l'invention. Au cours d'une première étape 23, le téléphone mobile est mis en service. Cette mise en service est suivie le moment venu d'un échange protocolaire 24 entre le téléphone mobile a et la station de base 1 au cours duquel le téléphone mobile reçoit une désignation de la loi de fréquence à utiliser, La, ainsi que de la fenêtre temporelle allouée, Ta, utilisable pour des premiers signaux en mode de circuit. L'échange protocolaire 24 précède immédiatement l'établissement 25 d'une communication pour la transmission de premiers signaux sur le premier canal ainsi déterminé. Pour un téléphone mobile de classe B et de classe A, l'échange protocolaire 24 est complété par un échange protocolaire 26 permettant de connaître les conditions de transmission de deuxièmes signaux, ici en mode de paquet, avec des lois de fréquence et des fenêtres temporelles possibles. Cet échange protocolaire 26 peut être suivi par des étapes 27 de communication (il n'y a pas alors établissement de communication) pour transmission de deuxièmes signaux sur le deuxième canal. L'étape 27 peut être simultanée à l'étape 25 pour un mobile de classe A, elle prend la place de l'étape 25 pour un mobile de classe B.

Dans l'invention, pour un mobile de classe B, on prévoit que la communication pour la transmission de deuxièmes signaux soit réalisée à la suite d'une requête 28 en établissement de cette communication pour ces deuxièmes signaux. Cette communication pour des deuxièmes signaux est alors faite sur le premier canal, celui qui sert pour la communication des premiers signaux en mode de circuit. La requête 28 est ensuite suivie par une signalisation, sur le premier canal cette fois, des conditions de réception des deuxièmes signaux, avec également une fréquence porteuse sur le premier canal.

En pratique, au cours de l'étape 29, sur le premier canal (c'est-à-dire avec loi de fréquence La, fenêtre temporelle allouée Ta, et fréquence balise correspondant au premier canal) des signaux de signalisation sont envoyés au téléphone mobile pour lui indiquer que, dans le mode paquet, la loi de fréquence sera également La (la même que pour le mode de circuit) et que les fenêtres temporelles seront les fenêtres 11, 10, 15 et 18 (voir figure 3c). La transmission de la signalisation se produit sur le premier canal parce qu'en mode de circuit le téléphone mobile a est en écoute sur le premier canal. Eventuellement la signalisation peut être envoyée sur le deuxième canal puisque, si le téléphone mobile est un téléphone mobile de casse B, il est également en veille sur la fréquence balise du deuxième canal. Toutefois, ,le fait de choisir le premier canal présente l'avantage de pouvoir faire fonctionner l'invention même avec les téléphones mobiles de classe C sous réserve que ces téléphones mobiles se soient déclarés à la station dé base 1 comme utilisateur en mode de circuit.

Après l'étape 29 se produit l'étape 30 au cours de laquelle, pendant une durée 16 TBF, la communication en mode de paquet, sur la porteuse du premier canal, est réalisée alors que la communication en mode de circuit n'a pas été interrompue et continue de se poursuivre normalement.

La figure 6 montre les signaux de signalisation qui sont envoyés au téléphone mobile a par la station de base 1, dans les fenêtres temporelles 9, 10 et 11, figure 3b. En plus des informations utiles, un deuxième canal de transmission sert pour envoyer des signaux de signalisation. Il sert donc de pendant au canal de balise du mode circuit. Il permet d'envoyer notamment des informations de destinataire DEST des informations de type n + m dans laquelle n et m désignent respectivement le nombres de fenêtres temporelles allouées au téléphone mobile pour l'émission et pour la réception des deuxièmes signaux en paquet. Ces signaux de signalisation donnent également une information de jeton représentative de la faculté laissée au téléphone mobile d'émettre ou de pas émettre (selon qu'il a le jeton ou pas), afin éviter des collisions avec les émissions en mode paquet d'autres téléphones mobiles sur la même voix de fréquence.

Selon l'invention, le mode GPRS ou transmission par paquet peut être ainsi propre par sa loi de fréquence à chaque téléphone mobile. Ceci a pour conséquence que les informations de signalisation, pour les téléphones mobiles de la classe A et B, voire de la classe C, seront de préférence acheminées par le premier canal, de façon à ce que le téléphone mobile puisse en être informé même s'il écoute que ce premier canal. Si on veut au moins permettre la simultanéité pour les téléphones mobiles de la classe B, on peut émettre la signalisation sur le deuxième canal, les données quant a elles étant transmises sur le premier canal.

La figure 4 montre que, pour un téléphone mobile de classe B, il peut aussi être choisi, conformément à ce qui avait été choisi pour le téléphone mobile a, d'utiliser une loi de fréquence Lb et de répartir les fenêtres temporelles, selon cette loi de fréquence, en fonction du besoin entre les communications en mode de circuit et les communications en mode de paquet. La figure 4 montre également que, pour un téléphone mobile z recevant par exemple des premiers signaux pendant la cinquième fenêtre temporelle en mode de circuit selon la loi de fréquence La, et émettant pendant la huitième fenêtre temporelle des signaux selon cette même loi de fréquence, il est possible de faire coexister simultanément un mode circuit et un mode paquet en retenant également les deuxième, troisième et quatrième fenêtres temporelles pour la réception et la septième fenêtre pour l'émission de deuxièmes signaux R2 et E2 respectivement. Dans ce cas, la partie droite de la figure 4 montre que les fenêtres deux, trois et quatre sont utilisées avec la même loi de fréquence La pour transmettre des signaux en mode paquet à destination à la foi du téléphone mobile a et du téléphone mobile z. Dans ce cas, chacun de ces deux téléphones mobiles devra décoder l'information de destination DEST pour savoir si les signaux reçus lui sont réellement destinés ou non. Au besoin cette information de destination et cette opération de décodage pourront être remplacées par une information préalable de signalisation ayant le même effet de prévenir chacun des deux téléphones mobiles a ou z d'avoir ou non à recevoir, ou à émettre.

Dans le téléphone mobile a, la mémoire programme 5 comporte un programme GSMC pour mettre en oeuvre une session de téléphonie mobile en mode circuit, et un programme GSMP pour mettre ne oeuvre une session en mode paquet. La mémoire 5 comporte également un sous programme REQ de requête pour établir un mode de paquet sur un premier canal dévolu à des premiers signaux en mode de circuit. Le sous programme REQ comporte notamment des instructions correspondant aux étapes 28 à 30. Pour l'étape 30, le sous programme REQ bascule, en fonction du rang de la fenêtre temporelle en cours, le type de traitement à appliquer aux données reçues. Ceci peut se réaliser en dotant le microprocesseur 2 d'une deuxième mémoire de travail, ou d'une mémoire de travail plus importante. Par ailleurs, dans les signaux de signalisation émis par la station de base une indication de mode de transmission est décodée par le sous programme REQ.

## Revendications

1. Procédé de communication entre une station (1) de base et un téléphone mobile (a) pour échanger simultanément avec des premiers circuits (NSS) des premiers signaux en mode de circuit (BSC) et avec des deuxièmes circuits (GSS) indépendants des premiers circuits des deuxièmes signaux en mode paquet (PCU), dans lequel
- pour une trame (8) de transmission, on attribue un premier canal (La) de transmission aux premiers signaux, et
- pour la même trame de transmission on attribue un deuxième canal de transmission aux deuxièmes signaux,
**caractérisé en ce qu'**il comporte les étapes suivantes
- on choisit avec les deuxièmes circuits le deuxième canal tel qu'une fréquence de porteuse d'échange dans chaque trame de transmission soit la même que pour le premier canal, et tel que des fenêtres temporelles d'échange pour les premiers (9, 17) et deuxièmes (11, 10, 15, 18) signaux soit différentes.

2. Procédé selon la revendication 1, **caractérisé en ce que**
- on transmet successivement dans un sens ou dans un autre, dans des fenêtres temporelles directement consécutives (9, 11) dans une même trame, des premiers signaux et des deuxièmes signaux.

3. Procédé selon l'une des revendications 1 à 2, **caractérisé en ce que**,
- dans une même trame, on sépare (14) une fin de réception de premiers signaux du début d'émission de deuxièmes signaux par une durée égale à une fenêtre temporelle.

4. Procédé selon l'une des revendications 1 à 3, **caractérisé en ce que**,
- pour choisir le deuxième canal on provoque préalablement un changement (22) du canal d'échange des premiers signaux ou des deuxièmes signaux.

5. Procédé selon l'une des revendications 1 à 4, **caractérisé en ce que**,
- on choisit le deuxième canal par une allocation coordonnée (20, 21) en privilégiant des fenêtres temporelles préférentielles.

6. Procédé selon l'une des revendications 1 à 5, **caractérisé en ce que**,
- on transmet les deuxièmes signaux en mode GPRS.

7. Procédé selon l'une des revendications 1 à 6, **caractérisé en ce que**,
- on transmet les premiers signaux, de type signaux de paroles ou SMS, en mode de circuit.

8. Procédé selon l'une des revendications 1 à 7, **caractérisé en ce que** les deuxièmes signaux sont des signaux de données au format I.P.

9. Téléphone mobile (a) muni d'un seul circuit d'émission réception selon un mode de téléphonie mobile, **caractérisé en ce qu'**il comporte dans une mémoire programme un programme pour mettre en place une communication en mode de circuit et une communication en mode paquet utilisant une même loi de fréquence, des moyens pour traiter en mode de circuit des signaux reçus pendant une fenêtre temporelle dans une trame de transmission et des moyens pour traiter en mode paquet des signaux reçus dans ladite trame de transmission pendant des fenêtres temporelles contiguës à cette fenêtre temporelle.

## Patentansprüche

1. Verfahren für die Kommunikation zwischen einer Basisstation (1) und einer Mobilfunkstation (a), wobei gleichzeitig erste Signale im Stationsmodus (BSC) mit ersten Schaltkreisen (NSS) und zweite Signale im Paketmodus (PCU) mit zweiten, von den ersten Schaltkreisen unabhängigen Schaltkreisen (GSS) ausgetauscht werden, wobei
für einen Übertragungsrahmen (8) ein erster Kanal (La) den ersten Signalen für die Übertragung zugeordnet wird und
für denselben Übertragungsrahmen den zweiten Signalen ein zweiter Übertragungskanal zugeordnet wird,
**dadurch gekennzeichnet, dass**
mit den zweiten Schaltkreisen der zweite Kanal ausgewählt wird, so dass eine Trägerfrequenz für den Austausch in jedem Übertragungsrahmen die gleiche wie für den ersten Kanal ist und die Zeitfenster für den Austausch für die ersten (9, 17) und die zweiten (11, 10, 15, 18) Signale unterschiedlich sind.

2. Verfahren nach Anspruch 1,
**dadurch gekennzeichnet, dass**
nacheinander in direkt aufeinander folgenden Zeitfenstern (9, 11) in demselben Rahmen erste Signale und zweite Signale in einer Richtung oder einer anderen übertragen werden.

3. Verfahren nach Anspruch 1 oder 2,
**dadurch gekennzeichnet, dass**
in demselben Rahmen zwischen dem Ende des Empfangs von ersten Signalen und dem Beginn der Ausstrahlung von zweiten Signalen ein zeitlicher Abstand liegt, der die Länge eines Zeitfensters hat.

4. Verfahren nach einem der Ansprüche 1 bis 3,
**dadurch gekennzeichnet, dass**
eine Änderung (22) des Austauschkanals für die ersten Signale oder die zweiten Signale vorgenommen wird, bevor der zweite Kanal gewählt wird.

5. Verfahren nach einem der Ansprüche 1 bis 4,
**dadurch gekennzeichnet, dass**
der zweite Kanal durch eine koordinierte Zuordnung (20, 21) bei Privilegierung bevorzugter Zeitfenster ausgewählt wird.

6. Verfahren nach einem der Ansprüche 1 bis 5,
**dadurch gekennzeichnet, dass**
die zweiten Signale im GPRS-Modus übertragen werden.

7. Verfahren nach einem der Ansprüche 1 bis 6,
**dadurch gekennzeichnet, dass**
die ersten Signale als Sprachsignale oder SMS-Signale im Stationsmodus übertragen werden.

8. Verfahren nach einem der Ansprüche 1 bis 7,
**dadurch gekennzeichnet, dass**
die zweiten Signale Datensignale im IP-Format sind.

9. Mobilfunkgerät (a) mit einem einzigen Sende-Empfangs-Schaltkreis für einen Mobiltelephonie-Modus,
**dadurch gekennzeichnet, dass**
es in einem Programmspeicher ein Programm, um eine Kommunikation in einem Stationsmodus und eine Kommunikation in einem Paketmodus einzurichten, wobei dieselbe Frequenzregel angewendet wird, Einrichtungen zum Verarbeiten von empfangenen Signalen im Stationsmodus während eines Zeitfensters bei einem Übertragungsrahmen und Einrichtungen zum Verarbeiten von empfangenen Signalen im Paketmodus in dem Übertragungsrahmen während Zeitfenstern, die sich an das Zeitfenster anschließen, umfasst.

## Claims

1. Process for communication between a base station (1) and a mobile telephone (a) to simultaneously exchange with first circuits (NSS) first signals in circuit mode (BSC) and with second circuits (GSS) independent of the first circuits second signals in packet mode (PCU), in which
- for a transmission frame (8), a first transmission channel (La) is assigned to the first signals, and
- for the same transmission frame, a second transmission channel is assigned to the second signals,
***characterised by** the fact that* it includes the following steps
- with the second circuits the second channel is selected such that an exchange carrier frequency in each transmission frame is the same for the first channel, and such that exchange time windows for the first (9, 17) and second (11, 10, 15, 18) signals are different.

2. Process as described in claim 1, ***characterised by** the fact that*
- first signals and second signals are transmitted in succession in one direction or another, in directly consecutive time windows (9, 11) in a same frame.

3. Process as described in one of claims 1 and 2, ***characterised by** the fact that*
- in a same frame, an end of reception of first signals is separated (14) from the start of transmission of second signals by a period equal to one time window.

4. Process as described in one of claims 1 to 3, ***characterised by** the fact that*
- to select the second channel, a change (22) is caused in advance in the exchange channel of the first signals or of the second signals.

5. Process as described in one of claims 1 to 4, ***characterised by** the fact that*
- the second channel is selected by co-ordinated allocation (20, 21) giving privileged status to preferred time windows.

6. Process as described in one of claims 1 to 5, ***characterised by** the fact that*
- the second signals are transmitted in GPRS mode.

7. Process as described in one of claims 1 to 6, ***characterised by** the fact that*
- the first signals, of speech or SMS signal type, are transmitted in circuit mode.

8. Process as described in one of claims 1 to 7, ***characterised by** the fact that* the second signals are data signals in I.P. format

9. Mobile telephone (a) provided with a single transmission reception circuit in a mobile telephony mode, ***characterised by** the fact that* it includes in a program memory a program for setting up a communication in circuit mode and a communication in packet mode, using the same frequency law, means for processing signals received during a time window in a transmission frame in circuit mode, and means for processing signals received in the said transmission frame during time windows contiguous with this time window in packet mode.
